# EUROPÄISCHE PATENTSCHRIFT

(11) **EP 0 815 639 B1**
(45) Veröffentlichungstag und Bekanntmachung des Hinweises auf die Patenterteilung: **02.12.1998**
(21) Anmeldenummer: 96901713.6
(22) Anmeldetag: 09.02.1996
(51) Int. Cl.: H02P 3/12, H02P 7/285

(54) **SCHALTUNG ZUM BETREIBEN EINES ELEKTROMOTORS**
CIRCUIT FOR DRIVING AN ELECTRIC MOTOR
CIRCUIT DE COMMANDE D'UN MOTEUR ELECTRIQUE

(30) Priorität: 11.03.1995 DE 19508880
(43) Veröffentlichungstag der Anmeldung: 07.01.1998
(73) Patentinhaber: ROBERT BOSCH GMBH, 70442 Stuttgart (DE)
(72) Erfinder: SEILER, Hartmut, D-76532 Baden-Baden (DE); GRASS, Ansgar, D-77652 Offenburg (DE)
(86) Internationale Anmeldenummer: DE9600199
(87) Internationale Veröffentlichungsnummer: WO9628883

(56) Entgegenhaltungen:
- US-A- 3 919 611
- PATENT ABSTRACTS OF JAPAN Bd. 013, Nr. 240 (E-767) 06 Juni 1989 & JP,A,01 043 082 (NEC CORP) 15 Februar 1989

## Beschreibung

### Stand der Technik

Die Erfindung geht aus von einer Schaltung zum Betreiben eines Elektromotors nach der Gattung des unabhängigen Anspruchs. Aus der US-Patentschrift 3 487 282 ist eine gattungsgemäße Schaltung bekannt, die einen Thyristor zeigt, der in einem parallel zu einem Motor liegenden Stromkreis enthalten ist. Der Thyristor ist zum Kurzschließen des Elektromotors vorgesehen, um ein rasches Abbremsen zu ermöglichen. Zum Ein- und Ausschalten des Elektromotors ist ein Schalttransistor vorgesehen, der in Abhängigkeit von einem Steuersignal einen Anschluß des Elektromotors mit einer Spannungsquelle verbindet. Die während des Abschaltvorgangs am Elektromotor auftretende induktive Spannungsspitze wird von einer Diode beseitigt, die parallel zum Elektromotor geschaltet ist.

Aus dem Abstract der JP 1043082 ist eine weitere Schaltung bekannt, die einen parallel zum Motor geschalteten Zweiwegthyristor (Triac) aufweist, der in Folge von einem Stop-Signal eingeschaltet wird, einen Kurzschlußstrom herbeiführt und den Motor mittels einer Kurzschlußbremse bremst.

Der Erfindung liegt die Aufgabe zugrunde, eine Schaltung zum Betreiben eines Elektromotors anzugeben, die mit einfachen Mitteln die Dämpfung von induktiven Spannungsspitzen und ein Abbremsen des Elektromotors ermöglicht.

Die Aufgabe wird durch die im unabhängigen Anspruch angegebenen Merkmale gelöst.

### Vorteile der Erfindung

Die erfindungsgemäße Schaltung ist besonders preisgünstig realisierbar. Erfindungsgemäß ist ein Zweiwegthyristor vorgesehen, der parallel zum Elektromotor geschaltet ist. Der Zweiwegthyristor enthält zwei antiparallel-arbeitende Thyristoren, die in einem einzigen Siliziumkristall integriert sind. Das Bauelement enthält nur eine Steuerelektrode, über die der Strompfad je nach Polung der äußeren Spannung in beiden Richtungen durch einen Impuls freigegeben (gezündet) werden kann. Der Zweiwegthyristor wird im folgenden als Triac bezeichnet. Der Triac übernimmt sowohl die Dämpfung der induktiven Spannungsspitze während des Abschaltvorgangs des Elektromotors als auch das Kurzschließen des Elektromotors beim Abbremsvorgang. Zur Realisierung der erfindungsgemäßen Schaltung wird lediglich ein Halbleiterbauelement benötigt, das inzwischen auch in einer Ausführung als oberflächenmontierbares Bauelement (SMD) verfügbar ist. Die SMD-Ausführung benötigt nur wenig Platz auf einer Leiterplatte und ist automatisch bestückbar. Daraus resultieren Kostenvorteile in der Serienproduktion.

Der erfindungsgemäß vorgesehene Triac wird von einem ersten Steuersignal beaufschlagt, das von der am Elektromotor auftretenden Spannung abhängt. Das erste Steuersignal ist deshalb zur Dämpfung der induktiven Spannungsspitze während des Abschaltvorgangs des Elektromotors geeignet. Der Triac wird mit einem zweiten Steuersignal beaufschlagt, das ein Signalgeber bereitstellt. Das zweite Steuersignal ist zum Bremsen des Elektromotors geeignet.

Die erfindungsgemäß vorgesehenen Maßnahmen gemäß dem unabhängigen Anspruch ermöglichen insbesondere ein sicheres Betreiben des Elektromotors in Anwendungen, bei denen eine Abtrennung der Schaltung mittels eines Schalters von einer Spannungsquelle vorgesehen ist. Insbesondere das erste Steuersignal, das von der am Elektromotor auftretenden Spannung abhängt, sorgt in Verbindung mit dem Triac dafür, daß auch nach dem Öffnen des Schalters die Dämpfung der induktiven Spannungsspitze beim Abschaltvorgang des Elektromotors sichergestellt ist.

Eine besonders einfach zu realisierende Maßnahme sieht vor, daß das erste Steuersignal, das von der am Elektromotor auftretenden Spannung abhängt, mittels einer Diode aus der Motorspannung gewonnen wird. Die mit einem Anschluß des Elektromotors unmittelbar verbundene Diode, die zum Steuereingang des Triac führt, wird beim Auftreten der induktiven Spannungsspitze leitend.

Eine andere vorteilhafte Maßnahme sieht vor, daß das zweite Steuersignal für den Triac von einer Motorsteuerschaltung bereitgestellt wird, die das zweite Steuersignal als Bremssignal für den Elektromotor ausgibt. Die Motorsteuerschaltung erzeugt gleichzeitig Schaltsignale für einen Schalttransistor, der zum Ein- und Ausschalten des Elektromotors vorgesehen sein kann.

Weitere vorteilhafte Maßnahmen betreffen den Einsatz von Widerständen, über welche die beiden Steuersignale für den Triac geführt sind. Die Widerstände ermöglichen eine Begrenzung des Triac-Zündstroms.

Weitere vorteilhafte Weiterbildungen und Ausgestaltungen ergeben sich aus der folgenden Beschreibung.

### Zeichnung

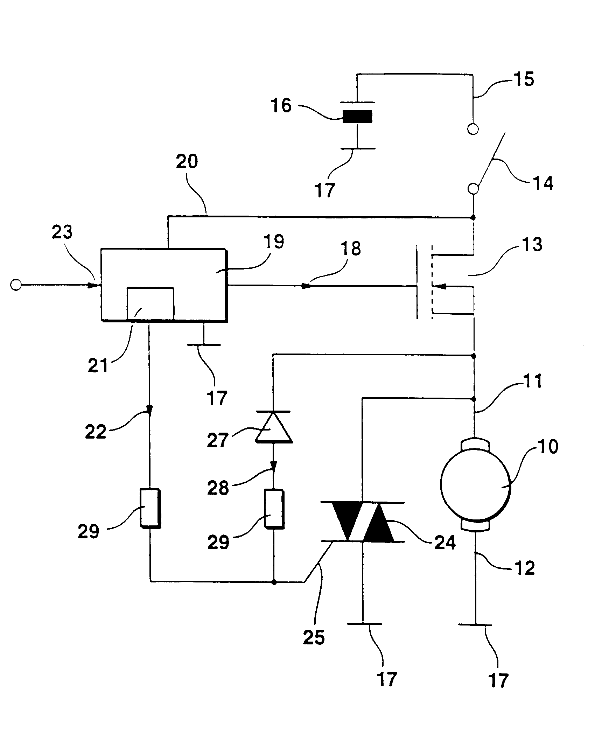

Die Figur zeigt ein Schaltbild eines Ausführungsbeispiels einer erfindungsgemäßen Schaltung zum Betreiben eines Elektromotors.

Die Figur zeigt einen Elektromotor 10 mit einem ersten und zweiten Anschluß 11, 12. Der erste Anschluß 11 ist über einen Schalttransistor 13 und einen Schalter 14 mit einer ersten Stromversorgungsleitung 15 verbindbar. Die erste Stromversorgungsleitung 15 führt zu einer Energiequelle 16, die eine Betriebsspannung zur Verfügung stellt, die zwischen der ersten Stromversorgungsleitung 15 und einer zweiten Stromversorgungsleitung 17 auftritt. Die zweite Stromversorgungsleitung 17 wird im folgenden als Masse 17 bezeichnet. Der zweite Anschluß 12 des Elektromotors 10 ist mit Masse 17 verbunden.

Der Schalttransistor 13 wird von einem Schaltsignal 18 angesteuert, das eine Motorsteuerschaltung 19 bereitstellt. Die Energieversorgung der Motorsteuerschaltung 19 erfolgt über eine zum Schalter 14 führende Energieversorgungsleitung 20 und über eine zur Masse 17 führende Leitung. Die Motorsteuerschaltung 19 enthält eine Bremsschaltung 21, die ein Bremssignal 22 abgibt, das im folgenden als zweites Steuersignal 22 bezeichnet wird. Sowohl das Schaltsignal 18 als auch das zweite Steuersignal 22 werden von der Motorsteuerschaltung 19 in Abhängigkeit von einem Betriebsartensignal 23 festgelegt, das der Motorsteuerschaltung 19 von außen zugeleitet wird.

Parallel zum Elektromotor 10 ist ein Triac 24 geschaltet. Sein Steuereingang 25 ist über einen ersten Widerstand 26 und eine in Reihe zum ersten Widerstand 26 geschalteten Diode 27 mit dem ersten Motoranschluß 11 verbunden. An der Diode 27 tritt ein erstes Steuersignal 28 auf. Der Steuereingang 25 des Triac 24 wird weiterhin über einen zweiten Widerstand 29 mit dem als zweites Steuersignal 22 bezeichneten Bremssignal beaufschlagt.

Die erfindungsgemäße Schaltung zum Betreiben des Elektromotors 10 arbeitet folgendermaßen:

Die Steuerung des Elektromotors 10 erfolgt über das Betriebsartensignal 23, das der Motorsteuerschaltung 19 zugeführt wird. Das Betriebsartensignal 23 legt beispielsweise fest, ob der Elektromotor ein- oder ausgeschaltet sein soll. Weiterhin legt das Betriebsartensignal 23 beispielsweise fest, ob der Elektromotor gleichzeitig mit dem Abschalten auch gebremst werden soll. Ein Abbremsen des Elektromotors ist beispielsweise bei einem Verstellantrieb erforderlich, um ein Überschwingen nach dem Erreichen einer vorgegebenen Position zu reduzieren. Eine weitere Anwendung ist bei einem Scheibenwischerantrieb eines Kraftfahrzeugs gegeben. Der Wischhebel soll nach Erreichen der Ruhelage durch ein starkes Abbremsen des Elektromotors 10 sofort anhalten.

Beim Abschalten des Elektromotors 10 treten zwei entgegengesetzte Induktionsspannungen auf. Eine induktive Spannungsspitze wird durch die zeitliche Änderung des durch den Elektromotors 10 fließenden Stroms hervorgerufen. Zur Begrenzung dieser induktiven Spannungsspitze ist ein parallel zum Elektromotor 10 liegender Freilaufkreis vorgesehen, worüber sich die in der Induktivität des Elektromotors 10 gespeicherte Energie entlädt. Bei der in der Figur gezeigten Ausführung der erfindungsgemäßen Schaltung tritt beim Abschalten des Elektromotors 10 am ersten Anschluß 11 eine negative induktive Spannungsspitze auf, welche die Diode 27 in den leitenden Zustand bringt. In diesem Betriebszustand tritt das erste Steuersignal 28 auf, das über den ersten Widerstand 26 dem Steuereingang 25 des Triac 24 zugeleitet wird. Der Freilaufkreis ist damit geschlossen. Das erste Steuersignal 28 tritt aber nur dann auf, wenn der Schalter 14 bei laufendem Elektromotor 10 geöffnet wird. Nur in diesem Fall wird der Freilaufkreis, der ansonsten über die Stromversorgungsleitungen 15, 17 und über die Energiequelle 16 geschlossen ist, geöffnet und folglich unterbrochen. In diesen Betriebsfall entfällt gleichzeitig die Energieversorgung der Motorsteuerschaltung 19 über die Energieversorgungsleitung 20, so daß ein entsprechendes Einschaltsignal für den Triac 24 nicht mehr bereitgestellt werden kann. Das erste, in Abhängigkeit von der am Elektromotor 10 auftretende Steuersignal 28 tritt, unabhängig von der Energieversorgungssituation, stets dann auf, wenn die Spannung am ersten Anschluß 11 des Elektromotors 10 einen Wert aufweist, bei welchem die Diode 27 leitend wird.

Ein Abbremsen des Elektromotors 10 erfolgt mit dem zweiten Steuersignal 22, das die Motorsteuerschaltung 19 in der Bremsschaltung 21 erzeugt. Das dem Steuereingang 25 des Triac 24 zugeführte zweite Steuersignal 22 zündet den Triac und schließt den Elektromotor 10 kurz.

Die beiden Widerstände 26, 27 begrenzen jeweils den im Steuereingang 25 des Triac 24 fließenden Zündstrom.

## Patentansprüche

1. Schaltung zum Betreiben eines Elektromotors (10), mit einem Triac (24), das in einem parallel zum Elektromotor liegenden Stromkreis enthalten ist, und mit einem von einem Signalgeber (19) bereitgestellten Steuersignal (22) für den Triac (24), das den Strompfad im Triac (24) in eine Richtung freigibt, dadurch gekennzeichnet, daß
ein weiteres Steuersignal (28) für den Triac (24) vorgesehen ist, das von der an einem Anschluß (11) des Elektromotors (10) auftretenden Spannung abhängt und den Strompfad im Triac (24) in der entgegengesetzten Richtung freigibt.

2. Schaltung nach Anspruch 1, dadurch gekennzeichnet, daß das erste Steuersignal (28) mittels einer Diode (27) vom ersten Anschluß (11) des Elektromotors (10) gewonnen wird.

3. Schaltung nach Anspruch 1, dadurch gekennzeichnet, daß als Signalgeber (19) eine Motorsteuerschaltung vorgesehen ist, die das zweite Steuersignal (22) als Bremssignal für den Elektromotor (10) bereitstellt.

4. Schaltung nach Anspruch 1, dadurch gekennzeichnet, daß ein erster Widerstand (26) zur Strombegrenzung des ersten Steuersignals (28) vorgesehen ist.

5. Schaltung nach Anspruch 1, dadurch gekennzeichnet, daß ein zweiter Widerstand (29) zur Strombegrenzung des zweiten Steuersignals (22) vorgesehen ist.

## Claims

1. Circuit for operating an electric motor (10), having a triac (24) which is contained in a circuit in parallel with the electric motor, and having for the triac (24) a control signal (22) which is provided by a signal generator (19) and releases the current path in the triac (24) in one direction, characterized in that there is provided for the triac (24) a further control signal (28), which is a function of the voltage occurring at a terminal (11) of the electric motor (10) and releases the current path in the triac (24) in the opposite direction.

2. Circuit according to Claim 1, characterized in that the first control signal (28) is obtained by means of a diode (27) from the first terminal (11) of the electric motor (10).

3. Circuit according to Claim 1, characterized in that there is provided as a signal generator (19) a motor control circuit which provides the second control signal (22) as braking signal for the electric motor (10).

4. Circuit according to Claim 1, characterized in that a first resistor (26) is provided for limiting the current of the first control signal (28).

5. Circuit according to Claim 1, characterized in that a second resistor (29) is provided for limiting the current of the second control signal (22).

## Revendications

1. Circuit servant à commander un moteur électrique (10), comprenant un triac (24) qui est contenu dans un circuit qui se trouve en parallèle avec le moteur électrique, et un signal de commande (22) du triac (24), fourni par un capteur de signaux (19), signal qui libère dans un sens le passage du courant dans le triac (24),
caractérisé en ce que
on prévoit un autre signal de commande (28) pour le triac (24) qui dépend de la tension se produisant sur un raccordement (11) du moteur électrique (10) et qui libère le passage du courant dans le triac (24) dans le sens opposé.

2. Circuit selon la revendication 1,
caractérisé en ce que
le premier signal de commande (28) est obtenu au moyen d'une diode (27) à partir du premier raccordement (11) du moteur électrique (10).

3. Circuit selon la revendication 1,
caractérisé en ce que
on prévoit d'avoir comme capteur de signaux (19)= un circuit de commande du moteur qui fournit au moteur électrique (10) le deuxième signal de commande (22) en tant que signal de freinage.

4. Circuit selon la revendication 1,
caractérisé en ce que
on prévoit d'avoir une première résistance (26) pour limiter l'intensité du premier signal de commande (28).

5. Circuit selon la revendication 1,
caractérisé en ce que
on prévoit d'avoir une deuxième résistance (29) pour limiter l'intensité du second signal de commande (22).
